# EUROPÄISCHE PATENTSCHRIFT

(11) **EP 1 801 416 B1**
(45) Veröffentlichungstag und Bekanntmachung des Hinweises auf die Patenterteilung: **22.10.2008**
(21) Anmeldenummer: 06021244.6
(22) Anmeldetag: 10.10.2006
(51) Int. Cl.: F04B 39/00, F04B 39/04, F04B 53/14, F16J 15/00, F16J 15/02, F16J 9/00

(54) **Hubkolbenmaschine**
Reciprocating piston machine
Machine à piston alternatif

(30) Priorität: 22.12.2005 DE 102005061482
(43) Veröffentlichungstag der Anmeldung: 27.06.2007
(73) Patentinhaber: WABCO GmbH, 30453 Hannover (DE)
(72) Erfinder: Broser, Dietmar, 30455 Hannover (DE); Warnecke, Otto, 38723 Seesen (DE)
(74) Vertreter: Günther, Constantin

(56) Entgegenhaltungen:
- EP-A- 1 394 413
- EP-A- 1 707 812
- DE-A1- 10 005 929
- US-A- 2 246 685
- US-A- 4 924 759
- US-A- 5 064 359

## Beschreibung

Die Erfindung betrifft eine Hubkolbenmaschine, insbesondere Kolbenkompressor, mit einem Zylinder, einem im Zylinder mittels Manschettendichtung abgedichtet laufenden Kolben, mit einem auf einer Kurbelwelle arbeitenden Antriebsmotor, dessen Antriebswelle von einer Bohrung der Kurbelwelle aufgenommen ist, und mit einem Pleuel mit Pleuelstange, an deren einem Ende ein Pleuelauge zur Aufnahme eines Kurbelwellenzapfens der Kurbelwelle ausgebildet ist und an deren anderem Ende der einstückig mit dem Pleuel ausgebildete Kolben angeformt ist.

Bekannte Ausführungsformen der oben beschriebenen Art von Hubkolbenmaschinen haben folgende Nachteile: die Manschette der Manschettendichtung neigt bei hohem Druck umzukippen. Es besteht die Gefahr, dass die Manschette in den Manschettenringspalt des Pleuels eingezogen wird. Durch die bekannte Ausführungsform ist kein ausreichender Kippwinkel des Pleuels erzielbar. Das Tieftemperaturverhalten ist verbesserungsbedürftig.

Das Dokument EP 1 394 413 A1 offenbart einen Hubkolbenverdichter für gasförmige Medien, insbesondere für eine Niveauregelanlage in Kraftfahrzeugen, wobei der maximale Schwenkwinkel der Kolbenringlängsachse gegenüber der Längsachse der Zylinderlaufbahn bei der Aufwärtsbewegung des Kolbens kleiner ist als bei der Abwärtsbewegung des Kolbens und dass die Längsachse der Zylinderlaufbahn gegenüber der ersten Raumachse versetzt ist.

Die Aufgabe der vorliegenden Erfindung besteht darin, eine Hubkolbenmaschine der eingangs genannten Art so auszubilden, dass die genannten Nachteile vermieden sind.

Diese Aufgabe wird durch die Merkmale des Anspruchs 1 gelöst.

Die Erfindung schlägt vor, die Manschette der Manschettendichtung auf einer umlaufenden Schulter oder Stufe des Kolbens mittels eines Aufpressringes zu fixieren, dessen Außenkontur ballig ausgebildet ist bzw. eine Kugelform aufweist. Hierdurch werden folgende Vorteile erzielt: durch die ballige Ausführung ist ein größerer Kippwinkel des Pleuels möglich, da die vordere Dichtkante der Manschette ausweichen kann. Es kommt hierdurch zu einer flächigeren Anlage der Manschette, wodurch der Verschleiß reduziert wird und wodurch die Gefahr von Ausfällen verringert ist. Die erfindungsgemäße Ausbildung ermöglicht die Optimierung des Manschettenspiels zwischen dem Aufpressring und dem Zylinder sowie des Abstützdurchmessers des Kolbens. Ein erfindungsgemäß ausgebildeter Hubkolbenkompressor zeigt durch das Spiel und die größere Manschettenlänge ein verbessertes Tieftemperaturverhalten.

Vorteilhafte und zweckmäßige Weiterbildungen der Aufgabenlösung sind in den Unteransprüchen angegeben. Die Erfindung soll nachfolgend anhand der beigefügten Zeichnung, in der ein Ausführungsbeispiel dargestellt ist, näher erläutert werden.

Es zeigt:

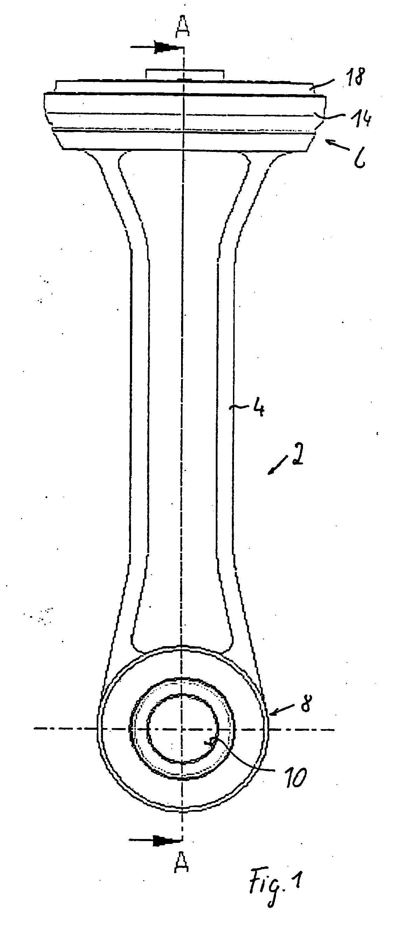

- Fig. 1: eine Ansicht eines erfindungsgemäß ausgebildeten Pleuels und

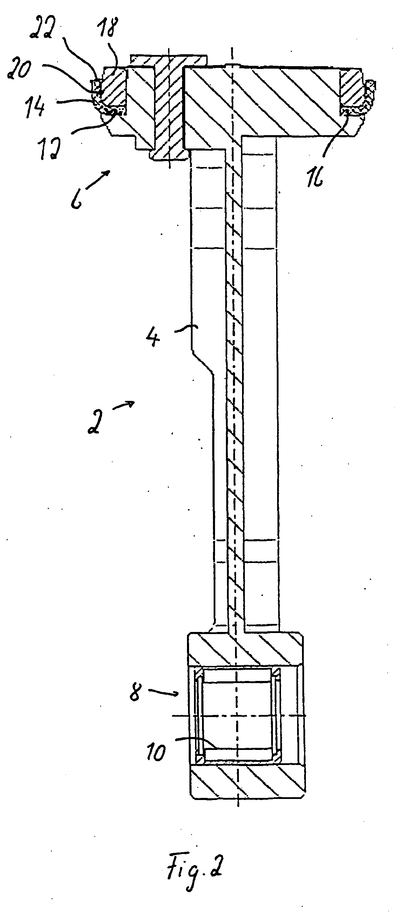

- Fig. 2: ein Schnitt A-A durch den Pleuel nach Fig. 1.

Die Zeichnung zeigt einen Pleuel 2 mit einem Pleuelschaft 4, an dessen einem Ende ein angeformter scheibenförmiger Kolben 6 angeordnet ist und an dessen anderem Ende ein Pleuelauge 8 mit Lagerbohrung 10 zur Aufnahme eines Kurbelzapfens (nicht dargestellt) vorhanden ist.

Der Kolben 6 weist eine periphere Stufe 12 auf, auf die eine Manschette 14 als Dichtung mit einem einwärtsragenden ersten ringförmigen Schenkel 16 mittels eines Aufpressringes 18 aufgepresst ist.

Der Aufpressring 18 ist mit einer balligen bzw. kugelförmigen Außenkontur ausgebildet. Die Manschette 14 umgreift die Außenkontur 20 des Aufpressringes 18 mit einem zweiten, ringförmigen, bis wenigstens zum maximalen Durchmesser des balligen Kolbens 6 verlaufenden Schenkel 22.

Durch Verlängerung der Manschette 14, z.B. durch Verlängerung des Schenkels 22, bis zur Höhe eines in Großserienprodukten üblichen, optimal ausgelegten Kolbenrings kann sichergestellt werden, dass durch die ballige bzw. kugelförmige Ausbildung des Aufpressrings 18 über den gesamten Hub des Pleuels 2 ein relativ enges Spiel vorhanden ist. Hierdurch wird ein verbessertes Temperaturverhalten erzielt.

### Bezugszeichenliste

- 2: Pleuel
- 4: Pleuelschaft
- 6: Kolben
- 8: Pleuelauge
- 10: Lagerbohrung
- 12: Stufe
- 14: Manschette
- 16: Schenkel
- 18: Aufpressring
- 20: Außenkontur
- 22: Schenkel

## Patentansprüche

1. Hubkolbenmaschine, insbesondere Kolbenkompressor mit einem Zylinder, einem im Zylinder mittels Manschettendichtung abgedichtet laufenden Kolben (6), mit einem auf eine Kurbelwelle arbeitenden Antriebsmotor, dessen Antriebswelle von einer Bohrung der Kurbelwelle aufgenommen ist, und mit einem Pleuel (2) mit Pleuelstange, an deren einem Ende ein Pleuelauge (8) zur Aufnahme eines Kurbelwellenzapfens der Kurbelwelle ausgebildet ist und an deren anderem Ende der einstückig mit dem Pleuel (2) ausgebildete Kolben (6) angeformt ist, **dadurch gekennzeichnet, dass** die Manschette (14) der Manschettendichtung auf einer umlaufenden Schulter oder Stufe (12) des Kolbens (6) mittels eines Aufpressringes (18) fixiert ist, dessen Außenkontur (20) ballig, beziehungsweise kugelförmig, ausgebildet ist.

2. Hubkolbenmaschine nach Anspruch 1, **dadurch gekennzeichnet, dass** die Manschette (14) die Außenkontur (20) des Aufpressringes (18) umgreift.

3. Hubkolbenmaschine nach Anspruch 1 oder 2, **dadurch gekennzeichnet, dass** die Manschette (14) der Manschettendichtung bis wenigstens zum maximalen Durchmesser des balligen Kolbens (6) reicht.

## Claims

1. Reciprocating piston machine, especially a piston compressor, having a cylinder, a piston (6) running in the cylinder and sealed by means of a packing seal, having a drive motor acting on a crankshaft, the drive shaft of which drive motor is received by a bore in the crankshaft, and having a connector (2) with a connecting rod, at one end of which there is formed a connector eye (8) for receiving a crankshaft journal of the crankshaft and at the other end of which there is formed the piston (6) which is integral with the connector (2), **characterized in that** the packing (14) of the packing seal is fixed on a circumferential shoulder or step (12) of the piston (6) by means of a press ring (18), the outer contour (20) of which is convex or spherical.

2. Reciprocating piston machine according to claim 1, **characterized in that** the packing (14) surrounds the outer contour (20) of the press ring (18).

3. Reciprocating piston machine according to claim 1 or 2, **characterized in that** the packing (14) of the packing seal extends at least as far as the maximum diameter of the convex piston (6).

## Revendications

1. Machine à piston alternatif, notamment compresseur à piston, comprenant un cylindre, un piston (6) se déplaçant dans le cylindre en étant rendu étanche au moyen d'un joint d'étanchéité à garniture en manchette, comprenant également un moteur d'entraînement fournissant son travail à un vilebrequin et dont l'arbre d'entraînement est reçu par un alésage du vilebrequin, et comprenant également une bielle (2) avec une tige de bielle, à une extrémité de laquelle est formé un oeilleton de bielle (8) destiné à recevoir un maneton du vilebrequin, et à l'autre extrémité de laquelle est formé le piston (6) réalisé d'un seul tenant avec la bielle (2), **caractérisée en ce que** la garniture en manchette (14) du joint d'étanchéité à garniture en manchette est fixée sur un épaulement ou un gradin périphérique (12) du piston (6) au moyen d'un anneau de montage à force (18) dont le contour extérieur (20) est bombé ou respectivement de forme sphérique.

2. Machine à piston alternatif selon la revendication 1, **caractérisée en ce que** la garniture en manchette (14) entoure le contour extérieur (20) de l'anneau de montage à force (18).

3. Machine à piston alternatif selon la revendication 1 ou 2, **caractérisée en ce que** la garniture en manchette (14) du joint d'étanchéité à garniture en manchette s'étend au moins jusqu'au diamètre maximal du piston (6) bombé.
